# EUROPEAN PATENT SPECIFICATION

(11) **EP 3 229 173 B1**
(45) Date of publication and mention of the grant of the patent: **03.10.2018**
(21) Application number: 16163771.5
(22) Date of filing: 05.04.2016
(51) Int. Cl.: G06K 9/00

(54) **METHOD AND APPARATUS FOR DETERMINING A TRAVERSABLE PATH**
VERFAHREN UND VORRICHTUNG ZUR BESTIMMUNG EINES ÜBERQUERBAREN WEGES
PROCÉDÉ ET APPAREIL PERMETTANT DE DÉTERMINER UN TRAJET TRAVERSABLE

(43) Date of publication of application: 11.10.2017
(73) Proprietor: Conti Temic Microelectronic GmbH, 90411 Nürnberg (DE); Continental Automotive GmbH, 30165 Hannover (DE)
(72) Inventor: Amar, Robin, 134116 Panchkula (IN); Krishnan, Maneesha, 670141 Thaliparamba, Kannur (IN); Murthy, Girish, 560040 Bangalore (IN); von Rosenberg, Harald, 88138 Sigmarszell (DE)

(56) References cited:
- EP-A2- 1 705 917
- DE-A1-102011 109 569
- US-A1- 2004 240 710
- US-A1- 2014 160 244
- TANZMEISTER GEORG ET AL: "Road course estimation in unknown, structured environments", 2013 IEEE INTELLIGENT VEHICLES SYMPOSIUM (IV), IEEE, 23 June 2013 (2013-06-23), pages 630-635, XP032501936, ISSN: 1931-0587, DOI: 10.1109/IVS.2013.6629537 [retrieved on 2013-10-10]
- THORSTEN WEISS ET AL: "Robust Driving Path Detection in Urban and Highway Scenarios Using a Laser Scanner and Online Occupancy Grids", INTELLIGENT VEHICLES SYMPOSIUM, 2007 IEEE, IEEE, PI, 1 June 2007 (2007-06-01), pages 184-189, XP031126942, ISBN: 978-1-4244-1067-5

## Description

The present invention relates to a method and an apparatus for determining a traversable path. In particular, the present invention relates to determining a traversable path for a vehicle. Further, the present invention relates to an advanced driver assistance system comprising an apparatus for determining a traversable path.

### Prior art

Modern vehicles comprise a plurality of systems for assisting a driver when driving the vehicle. For instance, modern vehicles may comprise an advanced driver assistance system (ADAS) which may provide additional information to a driver or which may directly control the driving behaviour of the vehicle. For instance, such systems may control the speed of the vehicle and also automatically control a vehicle to keep a particular lane. For this purpose, it is necessary to provide environmental information to such an advanced driver assistance system. For example, the system may analyse environmental information in order to identify boundaries of a lane for controlling the behaviour of the vehicle. Conventional approaches for identifying boundaries may use vision-based road detection techniques or approaches which are based on edge detection and histograms. Such approaches usually are only suitable for structured roads. Further, these approaches require complex training of the algorithm in order to obtain reliable results.

EP 1 705 917 A2 teaches a detecting device and corresponding method for detecting an object in an image where the image is captured by an image capture means mounted on a vehicle. A road boundary is detected based upon a calculated side direction velocity component.

Tanzmeister et al. disclose in "Road course estimation in unknown, structured environments", IEEE Intelligent Vehicles Symposium (IV), an approach to road course estimation based on path planning through grid maps under non-holonomic and velocity constraints.

US 2014/160244 A1 teaches detection of three dimensional obstacles using a system mountable in a host vehicle including a camera connectible to a processor. Multiple image frames are captured in the field of view of the camera. In the image frames, an images feature is detected on an object in the environment of the vehicle.

Hence, there is a need for an enhanced, efficient and reliable determination of a traversable path for a vehicle and a robust detection of borders of such a traversable path.

### Disclosure of the invention

The present invention provides a method and an apparatus for determining a traversable path with the features of the independent claims.

According to a first aspect, a method for determining a traversable path for a vehicle is provided. The method comprises the steps of identifying objects in the environment of the vehicle; determining cluster points based on the identified objects in the environment of the vehicle; smoothing the determined cluster points to obtain smoothed clusters, wherein smoothing the determined cluster points comprises calculating a diameter of the smoothed clusters, wherein the diameter of the smoothed clusters is based on computing a variance of a probability distribution for the corresponding cluster point; and determining boundaries of the traversable path, wherein the boundaries are specified by open polygons and the vertices of the polygons are determined based on the smoothed clusters, wherein the vertices of the open polygons are determined by intersecting a line perpendicular to a direction of movement of the vehicle with a boundary of a smoothed cluster.

According to a further aspect, an apparatus for determining a traversable path for a vehicle is provided. The apparatus comprises a sensor, a computing unit, a smoothing unit and a boundary generator. The sensor is adapted to identify objects in the environment of the vehicle. The computing unit is adapted to determine cluster points based on the identified objects in the environment of the vehicle. The smoothing unit is adapted to smooth determined cluster points and to provide smoothed clusters, wherein smoothing the determined cluster points comprises calculating a diameter of the smoothed clusters, wherein the diameter of the smoothed clusters is based on computing a variance of a probability distribution for the corresponding cluster point. The boundary generator is adapted to determine the boundaries of the traversable path. The boundaries are specified by open polygons. The vertices of the polygons are determined based on the smoothed clusters, wherein the vertices of the open polygons are determined by intersecting a line perpendicular to a direction of movement of the vehicle with a boundary of a smoothed cluster.

### Advantages of the invention

It is an idea of the present invention to determine a traversable path of a vehicle in terms of polygons. Such polygons, in particular open polygons, can be evaluated by an intuitive approach. The traversable path can be derived from smoothed clusters based on obstacles in the environment of a vehicle. This makes the boundary estimation very reliable. Since the boundaries of the traversable path are provided as an open polygon, this approach is not biased to any specific shapes, e.g. straight lines, circles or clothoids. Hence, the approach for determining a traversable path is suitable for both, structured and unstructured road conditions.

In the method for determining a traversable path, the smoothing of the determined cluster points comprises calculating a diameter of smoothed clusters. The calculating of a diameter of the smoothed clusters is based on computing a variance of a probability distribution for the corresponding cluster point.

The vertices of an open polygon are determined by intersecting a line perpendicular to a direction of movement of the vehicle with a boundary of a smoothed cluster. In this way, a very robust determination of points relating to a boundary of a traversable path can be realized.

According to a further embodiment, the method comprises a step of determining quadrilaterals. Each quadrilateral surrounds a plurality of smoothed clusters. In this way, a plurality of smoothed clusters may be grouped together for determining a traversable path and performing a free space evaluation.

According to a further embodiment, the length of the determined quadrilaterals is calculated based on a length of a motion vector of the vehicle or the speed of the vehicle. In particular, a length in a direction of the motion of the vehicle may correspond to a length of a motion vector of the vehicle or the speed of the vehicle.

According to a further embodiment, the method may comprise a step of identifying a line segment in a quadrilateral. In particular, only smoothed clusters may be considered for determining vertices of an open polygon, if the line perpendicular to a direction of movement of the vehicle intersects the boundary of the smoothed cluster before intersecting the identified line segment. In this way, the determination of the polygon for specifying the boundaries of the traversable path can be further improved.

According to an embodiment, the line segment in the quadrilateral is determined based on a least square approach considering the positions of the smoothed clusters in a quadrilateral.

According to a further embodiment, the method comprises a step of adapting a path of movement of the vehicle based on the smoothed clusters. In this way, a very reliable path for controlling the movement of the vehicle can be achieved.

According to a further embodiment, the path of movement of the vehicle is adapted based on the distances to the left boundary and the right boundary, respectively.

According to a further embodiment, smoothing may be applied to the path of movement. In this way, a smooth path can be obtained, even if the chain of computed path vectors would result in a zig-zag-path.

According to an embodiment of the apparatus for determining a traversable path, the sensor may comprise LiDAR, radar, ultrasonic sensors and/or a camera. However, any further sensor for identifying objects in the environment of a vehicle may be possible, too.

According to a further aspect, an advanced driver assistance system comprising an apparatus for determining a traversable path is provided.

Further embodiments and implementations of the present invention may also comprise combinations of embodiments and features described herein, even if not explicitly mentioned.

The present invention will be described in the following by embodiments based on the accompanying drawings, wherein:
- Figure 1:: shows a schematic drawing of a smoothed cluster used by an embodiment;
- Figure 2:: shows a schematic drawing illustrating a determination of a traversable path according to an embodiment;
- Figure 3:: shows a schematic drawing illustrating a determination of a traversable path according to an embodiment;
- Figure 4:: shows a flowchart of a method for determining a traversable path according to an embodiment; and
- Figure 5:: shows a block diagram of an apparatus for determining a traversable path according to an embodiment.

### Description of embodiments

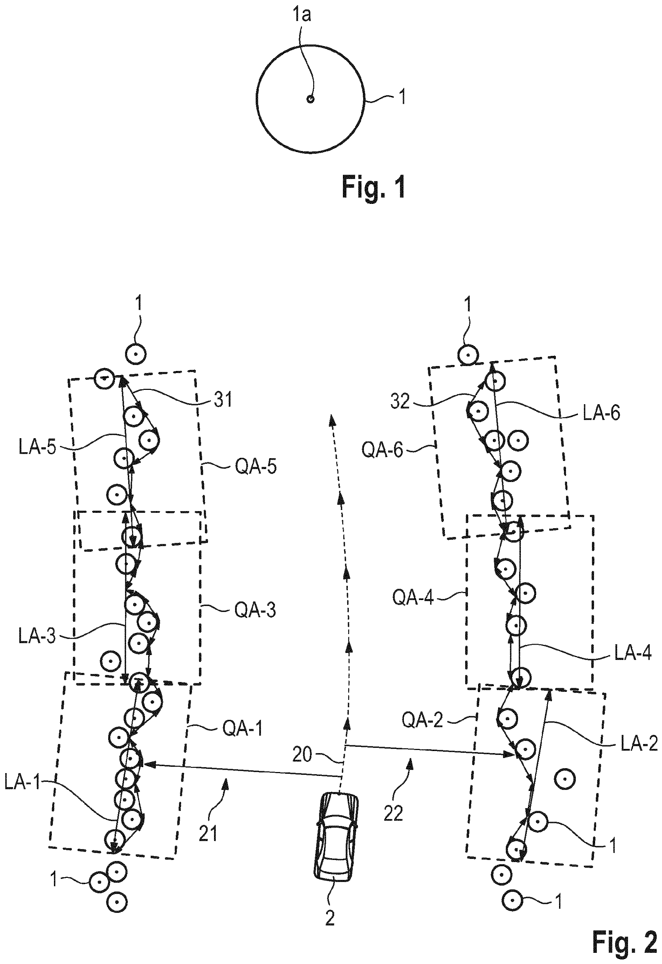

Figure 1 illustrates a schematic drawing of a smoothed cluster which is used in an embodiment. The smoothed cluster 1 can be created from a cluster point 1a. Cluster points 1a may be obtained, for instance, by any appropriate sensor. For example, cluster points 1a may be obtained by sensors of a vehicle detecting objects in an environment of a vehicle. For instance, cluster points 1a may be detected by a LiDAR sensor, a radar sensor, an ultrasonic sensor or a camera. However, any other appropriate sensor for detecting objects in an environment may be possible, too. In addition to a position of a cluster point 1a, further information may be associated with the cluster point 1a. For instance, additional cluster parameters may be associated with a cluster point. Cluster parameters may be, for instance, radar cross section, sensor parameters specifying a resolution of the sensor, a variance, in particular a same or different variance in x and y direction, or any other cluster parameter specifying properties of a determined cluster point 1a.

Based on the additional cluster parameters, additional properties of a cluster point 1a, for instance a cluster diameter, may be computed in order to determine a spatial distribution. For instance, the spatial distribution relates to a probability distribution. For instance, a probability distribution in form of a Gaussian distribution, or any other type of distribution, may be computed. In this way, a smoothed cluster 1 is obtained.

In a further step, the smoothed cluster 1 can be mapped to an appropriate grid. The grid may have a high resolution. In particular, the size of cells of the grid may be between 8x8 cm and 32x32 cm. However, a different cell size for the cells of the grid may be possible, too. Preferably, the positions of the determined clusters may be provided in coordinates relating to a vehicle. Further, the grid may be specified in coordinates of an external system, independent of the position and the orientation of the vehicle.

After having computed the smoothed clusters 1 and mapped the smoothed clusters 1 to a grid, borders of a traversable path can be computed as described in the following.

Figure 2 shows a schematic drawing illustrating the principle for determining a traversable path according to an embodiment. As can be seen in this figure, a plurality of smoothed clusters 1 has been identified. Even though all smoothed clusters 1 in Figure 2 have approximately a same diameter, this is only for illustrative purposes. It may be also possible that the smoothed clusters 1 may have different diameters. The smoothed clusters 1 may relate to obstacles which are detected in the environment of vehicle 2. In order to evaluate a traversable path for vehicle 2, a free-space evaluation is performed. For this purpose, a motion vector 20 of vehicle 2 is determined. Based on motion vector 20 of vehicle 2, perpendicular lines 21 and 22 are determined. A first perpendicular line 21 is perpendicular to a motion vector 20 and is directed towards the left border of a traversable path of vehicle 2. Accordingly, second perpendicular line 22 is perpendicular to a motion vector 20 and is directed towards a right border of the traversable path of vehicle 2.

Next, a point of intersection is determined respectively, whereby perpendicular lines 21 and 22 intersect a border of a smoothed cluster 1. Such a point of intersection between a perpendicular line and a border of a smoothed cluster 1 may be considered as a vertex of an open polygon. In this way, the boundaries of the traversable path for vehicle 2 can be defined by open polygons 31, 32. The vertices of each open polygon 31, 32 on the left and the right boundary of the traversable path for vehicle 2 can be determined by intersecting a border of a smoothed cluster 1 with lines 21, 22 perpendicular to the direction of movement of vehicle 2.

As can be further seen in Figure 2, quadrilaterals QA-i may be arranged surrounding a plurality of smoothed clusters 1. For example, the quadrilaterals QA-i may have a rectangular shape. A length of the quadrilaterals QA-i in the direction of movement of vehicle 2 may correspond to a speed or a length of a movement vector 20 of vehicle 2. After positioning a quadrilateral QA-i surrounding a plurality of the smoothed clusters 1, a line segment LA-i may be determined based on the positions of the smoothed clusters 1 within the respective quadrilateral QA-i. For example, the orientation of the line segment LA-i may be computed based on a least square approach considering the positions of the smoothed clusters 1 within the quadrilateral QA-i. However, any other approach for computing the orientation of line segment LA-i within the quadrilateral QA-i may be possible, too.

If a line segment LA-i is determined within a quadrilateral QA-i, the vertices for an open polygon 31, 32 specifying a boundary of the traversable path for vehicle 2, is only determined, if a perpendicular line 21 or 22 perpendicular to the direction of movement 20 of vehicle 2 is intersecting a border of a smoothed cluster 1 before the perpendicular line 21, 22 is intersecting line segment LA-i. Only, if the perpendicular line 21, 22 is intersecting a line segment LA-i before intersect a border of a smoothen cluster 1, a vertex for an open polygon 31, 32 may be created by the point where the perpendicular line 21, 22 intersects the line segment LA-i.

To determine the traversable path of vehicle 2 and the polygons 31, 32 specifying the boundaries of the traversable path, a plurality of successive quadrilaterals QA-i may be determined on the left and the right border of the traversable path. For instance, successive quadrilaterals QA-i may overlap by at least one smoothed cluster 1.

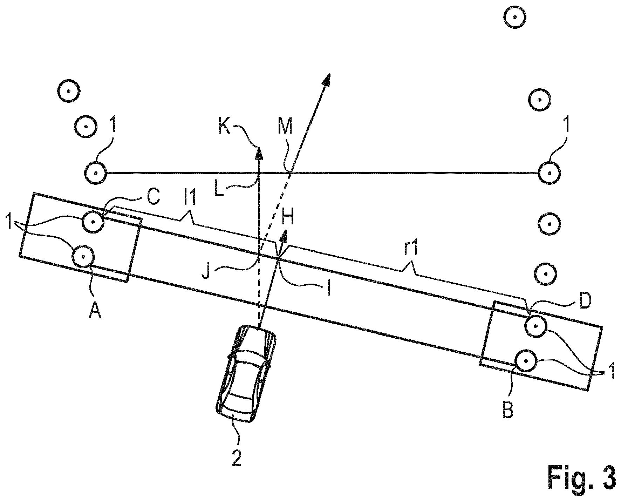

Figure 3 shows a schematic illustration for determining a traversable path according to an embodiment. A first traversable path for vehicle 2 is estimated based on the heading and the speed of vehicle 2. For example, an estimation of the traversable path may be directed to point H. Accordingly, point A can be determined by a line perpendicular to the estimated path intersecting a first smoothed cluster 1 on the left. Accordingly, point B can be determined by a line perpendicular to the estimated path intersecting a smoothed cluster 1 on the right. Further, point C can be determined by the last smoothed cluster on the left which is intersected by a line perpendicular to the estimated traversable path. Accordingly, point D can be determined by the last smoothed cluster 1 on the right which is intersected by a line perpendicular to the estimated path.

After having identified points C and D, a distance l1 is determined as a distance between point C and point I on the estimated traversable path. Accordingly, distance r1 can be determined as a distance between point D and point I on the traversable path. If the amount of the distance between the left distance l1 and the right distance r1 is larger than a predetermined threshold value, the target point of the traversable path may be adapted. For example, a point J may be determined in order to reduce the difference between the left distance l1 and the right distance r1. After having adapted the traversable path of vehicle 2 to the path directing to point J, a further traversable path is estimated. The further estimated traversable path is determined by starting from previously determined point J and directing in the same direction as the previously determined traversable path. Accordingly, an axis perpendicular to the newly created traversable path is created. Based on this perpendicular axis, the last smoothed clusters in direction of the movement of vehicle 2 are identified, which are reached by the perpendicular axis. Next, the length between point L on the estimated traversable path and the smoothed clusters on the left and the right is determined and the traversable path is adapted in order to make the distance between the left and the right border less than a predetermined threshold value. In this way, the traversable path may be adapted to a vector from point J to point M. After having adapted the traversable path, the procedure will be repeated by estimating a traversable path from point M to point N.

Finally, after having determined a traversable path based on smoothed clusters 1 on the left and the right boundary, the estimated traversable path may be further processed in order to obtain a smoothed path of movement for vehicle 2.

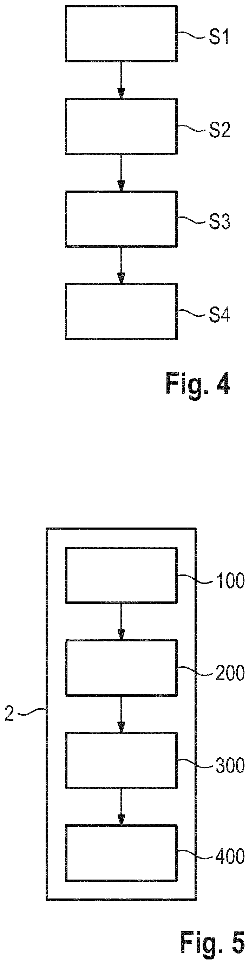

Figure 4 shows a diagram illustrating a method for determining a traversable path according to an embodiment. In a first step S1, objects are determined in an environment of a vehicle 2. Based on the identified objects in the environment of the vehicle 2, cluster points 1a are determined in step S2 and in step S3 the determined cluster points 1a are smoothed in order to obtain smoothed clusters 1. Based on the smoothed clusters 1, boundaries of a traversable path are determined in step S4. The boundaries are specified by an open polygon 31 and 32. The vertices of the polygons 31 and 32 are determined based on the smoothed clusters 1.

In particular, the vertices of the open polygons 31 and 32 are determined by intersecting a line perpendicular to an estimated direction of movement of the vehicle 2 with a boundary of a smoothed cluster 1. To determine a vector for a traversable path of vehicle 2, an estimation for a traversable path may be determined, wherein the direction of the traversable path vector may correspond to an orientation of the vehicle 2 and/or a direction of movement of vehicle 2. Further, the length of an estimation of the traversable path may correspond to a real or an estimated speed of the vehicle. The direction of the estimated traversable path may be adapted by comparing the distance of the traversable path to the left and the right boundary. Since a chain of the resulting traversable path vectors may result in a zig-zag path, a traversable path may be computed by smoothing the path resulting from the determined traversable path vectors.

Figure 5 shows a schematic illustration of an apparatus for determining a traversable path. The apparatus comprises a sensor 100, a computing unit 200, a smoothing unit 300 and a boundary generator 400. Sensor 100 may be any appropriate sensor for identifying objects in an environment, in particular in an environment of a vehicle 2. For instance, a sensor 100 may comprise a LiDAR sensor, a radar sensor, an ultrasonic sensor or a camera. Any other sensor for detecting objects in an environment may be possible, too.

Computing unit 200 may be adapted to determine clusters based on the identified objects. The determined clusters may be smoothed by a smoothing unit 300. For instance, smoothing unit 300 may consider additional cluster parameters, for instance a cross section of a radar sensor, or further parameters specifying a resolution of a sensor.

Boundary generator 400 determines boundaries of a traversable path. The boundaries of such a traversable path may be specified by open polygons. The vertices of such an open polygon may be determined based on the smoothed clusters provided by a smoothing unit 300. The vertices of the open polygons may be determined by intersection points between a boundary of a smoothed cluster and an axis perpendicular to an estimated motion vector.

In order to perform the determination of a traversable path, the smoothed clusters may be mapped to a particular processing grid. The processing grid may be a high resolution grid, for instance a grid having a resolution of the environment in cells between 8x8 cm and 32x32 cm. However, any further resolution for the processing grid may be possible, too. Summarizing, the present invention relates to a determination of a traversable path for a vehicle. It is for this purpose, that elements in the environment of the vehicle are identified and further processed as smoothed clusters. The smoothed clusters are considered as cluster points with a probability distribution having a particular diameter. Based on the smoothed clusters, the boundaries of the traversable path may be specified as open polygons. The vertices of the open polygons may be identified by intersecting the smoothed clusters with an axis perpendicular to an estimated movement of the vehicle.

## Claims

1. A method for determining a traversable path for a vehicle (2), comprising:
identifying (S1) objects in the environment of the vehicle (2) using a sensor;
determining (S2) cluster points (1a) based on the identified objects in the environment of the vehicle (2);
smoothing (S3) the determined cluster points (1a) to obtain clusters (1), which define smoothed clusters (1), wherein smoothing the determined cluster points (1a) comprises calculating a diameter of the clusters (1), wherein the diameter of the clusters (1) is based on computing a variance of a probability distribution for the corresponding cluster point;
determining (S4) boundaries of the traversable path,
wherein the boundaries are specified by open polygons (31, 32) and vertices of the polygons (31, 32) are determined based on the smoothed clusters (1),
**characterized in that** the vertices of the open polygons (31, 32) are determined by intersecting (A, B, C, D) a line (21, 22) perpendicular to a direction of movement of the vehicle (2) with a boundary of a smoothed cluster (1).

2. The method according to claim 1, further comprising a step of determining quadrilaterals (QA-i), each quadrilateral (QA-i) surrounding a plurality of smoothed clusters (1).

3. The method according to claim 2, wherein a length of the determined quadrilaterals (QA-i) is calculated based on a speed or a length of a motion vector of the vehicle (2).

4. The method according to claim 2 or 3, further comprising a step of identifying a line segment (LA-i) in a quadrilateral (QA-i), wherein only smoothed clusters (1) are considered for determining vertices of the open polygons, if the line (21, 22) perpendicular to a direction of movement of the vehicle (2) intersects (A, B, C, D) the boundary of the respective smoothed cluster (1) before intersecting the identified line segment (LA-i).

5. The method according to any of claims 1 to 4, further comprising a step of adapting a path of movement of the vehicle (2) based on the smoothed clusters (1).

6. The method according to claim 5, wherein the path of movement of the vehicle (2) is adapted by comparing a distance (l1) to the left boundary with a distance (r1) to the right boundary.

7. An apparatus for determining a traversable path for a vehicle (2), comprising:
a sensor (100), adapted to identify objects in the environment of the vehicle (2);
a computing unit (200), adapted to determine cluster points (1a) based on the identified objects in the environment of the vehicle (2);
a smoothing unit (300), adapted to smooth the determined cluster points (1a) and provide clusters (1), which define smoothed clusters, wherein smoothing the determined cluster points (1a) comprises calculating a diameter of the clusters (1), wherein the diameter of the clusters (1) is based on computing a variance of a probability distribution for the corresponding cluster point;
a boundary generator (400), adapted to determine boundaries of the traversable path, wherein the boundaries are specified by open polygons (31, 32) and vertices of the polygons (31, 32) are determined based on the smoothed clusters (1),
**characterized in that** the vertices of the open polygons (31, 32) are determined by intersecting (A, B, C, D) a line (21, 22) perpendicular to a direction of movement of the vehicle (2) with a boundary of a smoothed cluster (1) .

8. The apparatus according to claim 7, wherein the sensor (100) comprises a LiDAR sensor, a radar sensor, an ultrasonic sensor and/or a camera.

9. A driver assistance system, comprising an apparatus according to claim 7 or 8.

## Patentansprüche

1. Verfahren zur Bestimmung eines überquerbaren Weges für ein Fahrzeug (2), umfassend:
Identifizieren (S1) von Objekten in der Umgebung des Fahrzeuges (2) unter Verwendung eines Sensors;
Bestimmen (S2) von Clusterpunkten (1a) auf der Grundlage der identifizierten Objekte in der Umgebung des Fahrzeuges (2);
Glätten (S3) der bestimmten Clusterpunkte (1a), um Cluster (1) zu erlangen, die geglättete Cluster (1) definieren, wobei das Glätten der bestimmten Clusterpunkte (1a) das Berechnen eines Durchmessers der Cluster (1) umfasst, wobei der Durchmesser der Cluster (1) auf dem Errechnen einer Varianz einer Wahrscheinlichkeitsverteilung für den entsprechenden Clusterpunkt basiert;
Bestimmen (S4) von Grenzen des überquerbaren Weges, wobei die Grenzen durch offene Polygone (31, 32) spezifiziert werden und Spitzen der Polygone (31, 32) auf der Grundlage der geglätteten Cluster (1) bestimmt werden,
**dadurch gekennzeichnet, dass** die Spitzen der offenen Polygone (31, 32) durch Schneiden (A, B, C, D) einer senkrecht zu einer Bewegungsrichtung des Fahrzeuges (2) verlaufenden Linie (21, 22) mit einer Grenze eines geglätteten Clusters (1) bestimmt werden.

2. Verfahren nach Anspruch 1, ferner umfassend einen Schritt des Bestimmens von Vierecken (QA-i), wobei jedes Viereck (QA-i) eine Mehrzahl von geglätteten Clustern (1) umgibt.

3. Verfahren nach Anspruch 2, wobei eine Länge der bestimmten Vierecke (QA-i) auf der Grundlage einer Geschwindigkeit oder einer Länge eines Bewegungsvektors des Fahrzeuges (2) berechnet wird.

4. Verfahren nach Anspruch 2 oder 3, ferner umfassend einen Schritt des Identifizierens einer Strecke (LA-i) in einem Viereck (QAi), wobei für die Bestimmung von Spitzen der offenen Polygone nur geglättete Cluster (1) berücksichtigt werden, falls die senkrecht zu einer Bewegungsrichtung des Fahrzeuges (2) verlaufende Linie (21, 22) die Grenze des jeweiligen geglätteten Clusters (1) schneidet (A, B, C, D), bevor sie die identifizierte Strecke (LA-i) schneidet.

5. Verfahren nach einem der Ansprüche 1 bis 4, ferner umfassend einen Schritt des Anpassens einer Bewegungsbahn des Fahrzeuges (2) auf der Grundlage der geglätteten Cluster (1).

6. Verfahren nach Anspruch 5, wobei die Bewegungsbahn des Fahrzeuges (2) durch Vergleichen eines Abstandes (l1) zur linken Grenze mit einem Abstand (r1) zur rechten Grenze angepasst wird.

7. Vorrichtung zur Bestimmung eines überquerbaren Weges für ein Fahrzeug (2), umfassend:
einen Sensor (100), der so angepasst ist, dass er Objekte in der Umgebung des Fahrzeuges (2) identifiziert;
eine Recheneinheit (200), die so angepasst ist, dass sie Clusterpunkte (1a) auf der Grundlage der identifizierten Objekte in der Umgebung des Fahrzeuges (2) bestimmt;
eine Glätteinheit (300), die so angepasst ist, dass sie die bestimmten Clusterpunkte (1a) glättet und Cluster (1) bereitstellt, die geglättete Cluster definieren,
wobei das Glätten der bestimmten Clusterpunkte (1a) das Berechnen eines Durchmessers der Cluster (1) umfasst, wobei der Durchmesser der Cluster (1) auf dem Errechnen einer Varianz einer Wahrscheinlichkeitsverteilung für den entsprechenden Clusterpunkt basiert;
einen Grenzengenerator (400), der so angepasst ist, dass er Grenzen des überquerbaren Weges bestimmt, wobei die Grenzen durch offene Polygone (31, 32) spezifiziert werden und Spitzen der Polygone (31, 32) auf der Grundlage der geglätteten Cluster (1) bestimmt werden,
**dadurch gekennzeichnet, dass** die Spitzen der offenen Polygone (31, 32) durch Schneiden (A, B, C, D) einer senkrecht zu einer Bewegungsrichtung des Fahrzeuges (2) verlaufenden Linie (21, 22) mit einer Grenze eines geglätteten Clusters (1) bestimmt werden.

8. Vorrichtung nach Anspruch 7, wobei der Sensor (100) einen LiDAR-Sensor, einen Radarsensor, einen Ultraschallsensor und/oder eine Kamera umfasst.

9. Fahrerassistenzsystem, umfassend eine Vorrichtung nach Anspruch 7 oder 8.

## Revendications

1. Procédé pour déterminer un trajet traversable pour un véhicule (2), comprenant :
identifier (S1) des objets dans l'environnement du véhicule (2) en utilisant un capteur ;
déterminer (S2) des points en groupe (1a) sur la base des objets identifiés dans l'environnement du véhicule (2) ;
lisser (S3) les points en groupe (1a) pour obtenir des groupes (1), lesquels définissent des groupes lissés (1), lisser les points en groupe déterminés (1a) comprenant calculer un diamètre des groupes (1), le diamètre des groupes (1) étant basé sur le calcul de la variance d'une distribution de probabilité pour le point en groupe correspondant ;
déterminer (S4) des limites du trajet traversable, les limites étant spécifiées par des polygones ouverts (31, 32) et des sommets des polygones (31, 32) étant déterminés sur la base des groupes lissés (1),
**caractérisé en ce que** les sommets des polygones ouverts (31, 32) sont déterminés par l'intersection (A, B, C, D) d'une ligne (21, 22) perpendiculaire à une direction de déplacement du véhicule (2) et d'une limite d'un groupe lissé (1).

2. Procédé selon la revendication 1, comprenant en outre une étape de détermination de quadrilatères (QA-i), chaque quadrilatère (QA-i) entourant une pluralité de groupes lissés (1).

3. Procédé selon la revendication 2, une longueur des quadrilatères déterminés (QA-i) étant calculée sur la base d'une vitesse ou d'une longueur d'un vecteur de déplacement du véhicule (2).

4. Procédé selon la revendication 2 ou 3, comprenant en outre une étape d'identification d'un segment de ligne (LA-i) dans un quadrilatère (QA-i), seuls des groupes lissés (1) étant considérés pour déterminer des sommets des polygones ouverts si la ligne (21, 22) perpendiculaire à une direction de déplacement de véhicule (2) intersecte (A, B, C, D) la limite du groupe lissé (1) respectif avant d'intersecter le segment de ligne (LA-i) identifié.

5. Procédé selon l'une quelconque des revendications 1 à 4, comprenant en outre une étape d'adaptation d'un trajet de déplacement du véhicule (2) sur la base des groupes lissés (1).

6. Procédé selon la revendication 5, le trajet de déplacement du véhicule (2) étant adapté en comparant une distance (l1) jusqu'à la limite gauche avec une distance (r1) jusqu'à la limite droite.

7. Appareil pour déterminer un trajet traversable pour un véhicule (2), comprenant :
un capteur (100), conçu pour identifier des objets dans l'environnement du véhicule (2) ;
une unité de calcul (200), conçue pour déterminer des points en groupe (1a) sur la base des objets identifiés dans l'environnement du véhicule (2) ;
une unité de lissage (300), conçue pour lisser les points en groupes (1a) déterminés et fournir des groupes (1), lesquels définissent des groupes lissés,
le lissage des points en groupe déterminés (1a) comprenant le calcul d'un diamètre des groupes (1), le diamètre des groupes (1) étant basé sur le calcul d'une variance d'une distribution de probabilité pour le point en groupe correspondant ;
un générateur de limites (400), conçu pour déterminer des limites du trajet traversable, les limites étant spécifiées par des polygones ouverts (31, 32) et des sommets des polygones (31, 32) étant déterminés sur la base des groupes lissés (1), **caractérisé en ce que** les sommets des polygones ouverts (31, 32) sont déterminés par l'intersection (A, B, C, D) d'une ligne (21, 22) perpendiculaire à une direction de déplacement du véhicule (2) avec une limite d'un groupe lissé (1).

8. Appareil selon la revendication 7, le capteur (100) comprenant un capteur lidar, un capteur radar, un capteur à ultrasons et/ou une caméra.

9. Système d'aide à la conduite comprenant un appareil selon la revendication 7 ou 8.
